(19) 

Europäisches Patentamt

European Patent Office

Office européen des brevets

(11) **EP 3 406 376 B1**

(12) **EUROPEAN PATENT SPECIFICATION**

(45) Date of publication and mention
of the grant of the patent:
**18.03.2020 Bulletin 2020/12**

(51) Int Cl.:
***B23B 1/00*** *(2006.01)*          ***B23B 35/00*** *(2006.01)*
***G05B 19/4093*** *(2006.01)*

(21) Application number: **18150581.9**

(22) Date of filing: **08.01.2018**

(54) **METHOD FOR OPTIMIZATION OF MACHINING PRODUCTIVITY**

VERFAHREN ZUR BEARBEITUNGSPRODUKTIVITÄTSOPTIMIERUNG

PROCÉDÉ D'OPTIMISATION DE PRODUCTIVITÉ D'USINAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2017 EP 17425053**

(43) Date of publication of application:
**28.11.2018 Bulletin 2018/48**

(73) Proprietor: **Camaga Srl
80146 Napoli (IT)**

(72) Inventors:
• **DEL PRETE, Antonio
73100 LECCE (IT)**
• **CAPALBO, Salvatore Vincenzo
73100 LECCE (IT)**

(74) Representative: **Conversano, Gabriele
Laforgia, Bruni & Partners srl
Via Michele Garruba, 3
70122 Bari (IT)**

(56) References cited:
**CN-A- 102 609 591     US-A- 5 801 963
US-A- 5 903 474     US-A1- 2005 015 229**

Printed by Jouve, 75001 PARIS (FR)

**Description**

The present industrial invention relates to a method for productivity optimization in chip removal machining.

Field of the invention

A material subjected to chip removal machining is subjected to high deformation and high deformation rates, and reaches high temperatures during the process. These phenomena may influence their behaviour significantly, especially for the category of alloys classified as "difficult to be worked". This class of materials includes austenitic stainless steels, duplex steels and superduplex, nickel superalloys, titanium alloys, and some alloys obtained by powder metallurgy and heat treated. They are characterized by high mechanical resistance to high temperatures and corrosion, therefore they are widely used if it is required that the element works in critical conditions.

The metallurgical properties responsible for mechanical resistance to high temperatures and creep, however, are among the main causes of their poor machinability with machine tools, especially with regard to the fast wear of the tools used. In brief, the features of these materials influencing the phenomena of wear of tools are the following:

- Fast hardening during machining;
- Abrasive action due to the presence of hard precipitates;
- Chemical action due to strong affinity with cutting materials;
- Adhesion/welding of the material removed on the tool tip, due to the strong pressures and high temperatures reached during machining;
- Low thermal conductivity, which generates strong thermal stresses both in the piece and in the tool, due to the establishing of strong temperature gradients.

For these specific reasons, chip removal machining of these materials represents a big challenge nowadays. The knowledge of wear mechanisms while working this class of alloys is very important in the process control and in its optimization: in order to improve the durability of the tools process parameters values (and in particular cutting speed, advancement and depth of cut) should in fact be suitably selected , since it is well known that wear is a complex phenomenon, strongly dependent on such parameters: advancement and depth of cut are directly responsible for cutting forces increase, which influence strongly the tools breaking mechanisms. In addition, on the cutting speed the process temperature depends and therefore the extent of wear phenomena involved.

Wear is basically due to adhesion mechanisms: when average values of cutting speed are used, adhesion causes substantially friction wear; when instead high values of cutting speed are adopted, wear is linked to mechanisms of diffusion and chemical type. For these reasons, each type of tool has its own optimum cutting speed. It is known, for example, in case of nickel superalloys machining that sintered carbide uncoated tools should be used in cutting speed range between 20-50 m/min, while the same type of tools, but with coating, should work in the range between 40-90 m/min.

Many Key Performance Indicators of the cutting process, as for example the Material Removal Rate (MRR), are strongly influenced by the tools wear, which is clearly dependent on the adopted process parameters. In fact, wear concerns many aspects in chip removal machining, among which the most important ones are undoubtedly the productivity and the quality of the machined surfaces.

TECHNICAL PROBLEM

Therefore the optimization of the cutting process requires the simultaneous determination of several parameters, such as those related to the process conditions (cutting speed, advancement and depth of cut) and to the policies of tools substitution (definition of the maximum lip wear permissible), in order to maximize productivity and at the same time to reduce costs for each piece produced.

The problem is that it is not possible to define a deterministic relationship linking the width of the tool wear lip (in the following referred also as VB) with the working parameters, since many factors come in this dependence (such as for example the type of material to be worked and the tool geometry).

In literature, several authors have proposed methods to optimize performances of machine tools machining of materials difficult to be worked, as for example the maximization of the material removal rate (MRR), while observing suitable assigned strict conditions (useful life of the tool, quality of the worked surface and power required while working). The condition of the useful life of the tool is a standard problem of optimization , already studied by Taylor at the beginning of the last century. Document US 5 801 963 shows a method for the optimization of parameters in chip removal machining.

Anyway, in order to define the useful life of the tool, it is necessary to know the stochastic relationship between the width of the wear lip, VB, and the working parameters as well as the time of usage of the same tool; according to what has been stated this law cannot be known *a priori* and therefore it has to be obtained experimentally case after case.

AIM

Aim of the present invention is therefore to provide an innovative optimization method which allows to maximize the Material Removal Rate (thus the productivity), while observing a limit value assigned to the stochastic quantity VB (thus keeping on controlling the surface quality of the worked piece).

This method is presented in claim 1 and is based on the development, by regression analysis, of a suitable stochastic model of VB obtained by using data collected experimentally, and on the formulation and solution of a multi-objective optimization problem.

LIST OF SYMBOLS USED

| | |
|---|---|
| a | Tool advancement (mm) |
| MRR | Material Removal Rate (mm3 / min) |
| Nt | Tool replacing quantity |
| p | depth of cut (mm) |
| t | tool-material contact time (min) |
| t_cu | Tool replacing time |
| t0 | working start time |
| TL | useful life of tool (minutes) |
| tp | Production time |
| V | Volume to be removed (mm3) |
| v | cutting speed (m/min) |
| VB | wear lip |
| VBlim | Fixed limit for wear lip (mm) |

BRIEF DESCRIPTION OF THE INVENTION

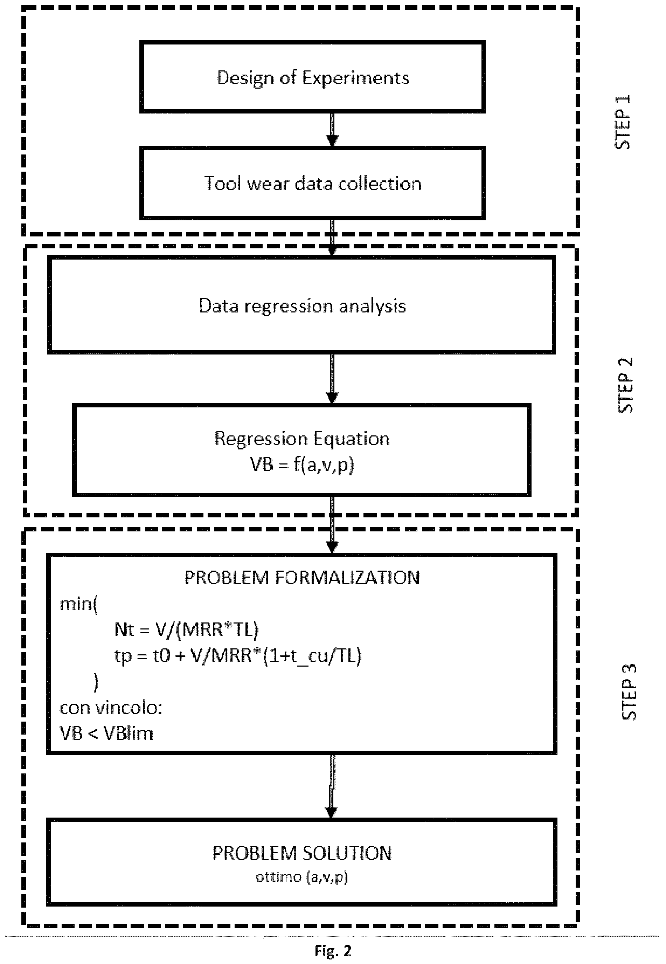

In Figure 2 it is shown the way in which, in the method according to the present invention, the just explained problem of optimization is formalized. As shown in the diagram in Figure 2, the aim of the process parameters optimization is to reduce at minimum the two functions tp (production time) and Nt (tool replacing quantity): the double aim is in fact to speed up at the maximum the production and to contain costs linked to tools replacing.

Both of these objective functions depend on the useful life of the tool (TL). When the process parameters are assigned, the useful life of the tool (TL) is the contact time between tool and piece for which the wear lip (VB) is kept under the maximum value (VBlim). When the working time reaches the useful life of the tool (TL), the tool has to be replaced. Since the dependence of the lip wear (VB) on the process parameters (a, v, p) is of stochastic type, introducing the limit on the maximum wear lip means to introduce a stochastic limit; in other words the useful life of the tool is not known *a priori*.

FIGURES

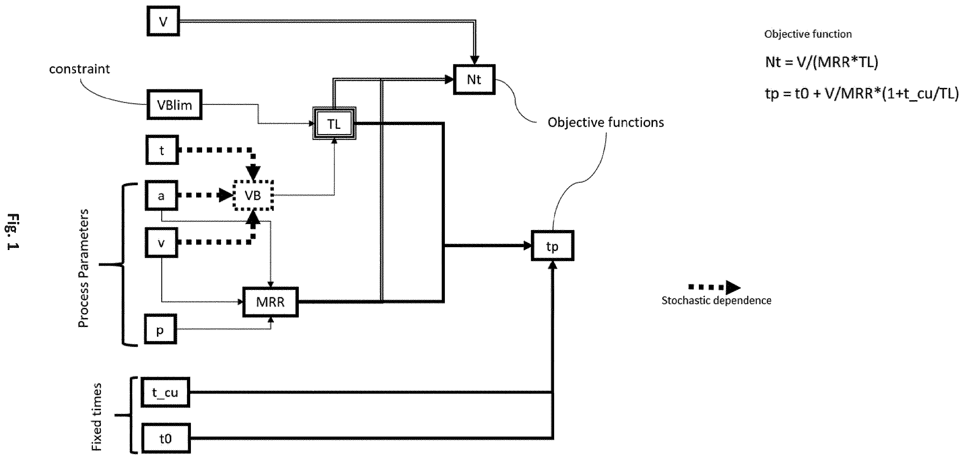

In Figure 1 it is shown a diagram of the dependencies between the various quantities involved in the cutting process with a tool; in Figure 2 it is shown an explicative flowchart of the steps of the optimization method according to the present invention; in Figure 3 it is shown the geometry of an example of tool; in Figure 4 there is shown a geometric schematization of the wear lip and a picture of a tool with wear lip displayed; Figure 5 shows an example of an experiments plan relating to cutting speed and advancement factors; in Figure 6 there are shown, by way of example, the detections of the wear lip size as a function of time for a DUPLEX F51 steel with insert CNMG 160612 MM 2025; in Figure 7 it is shown the distribution of residues on linear scale (a) and logarithmic scale (b); Figure 8 shows the historical results of the optimization algorithm for the number of cutting edges and the production time.

DETAILED DESCRIPTION OF THE INVENTION

The optimization method according to the present invention, which is based on wear modelling by using data collected during suitably planned experimental campaigns, allows to optimize the productivity in working materials difficult to be worked, while considering the particular wear limit represented by a determined value of wear lip (VB).

As yet said, the size of the wear lip (VB) is a stochastic quantity that, with the type of tool and some process conditions fixed (tool path, material properties, etc.), depends on the depth of cut p (mm), advancement a (mm/rev) and cutting speed v (m/min).

The optimization method consists of the following three distinct and inter-dependant steps, schematized in Figure 2:

1. Carrying out experimental campaigns for collecting wear data;
2. Wear modelling through a regression analysis of collected data;
3. Process optimization: formalization and solution of the problem.

Step 1

As yet said, the dependence of the tool wear on process parameters varies as a function of the type of the tool, the type of material worked, and the geometry of the piece, and so it is needed to evaluate it case after case.

Experimental campaigns for collecting data about wear are planned following the Design of Experiments (DOE) approach.

Once the boundary parameters (material and type of piece to be worked, type of tool) are set, the process parameters that can be changed are depth of cut (p), cutting speed (v) and advancement (a). For these parameters a variability range will be estimated within which the research for optimal values is to be carried out..

As in other fields of research, in modelling magnitudes of interest in chip removal machining as well, as a consequence in modelling the dependence of VB on the process parameters, the DOE allows to monitor and control the variations of the responses of interest.

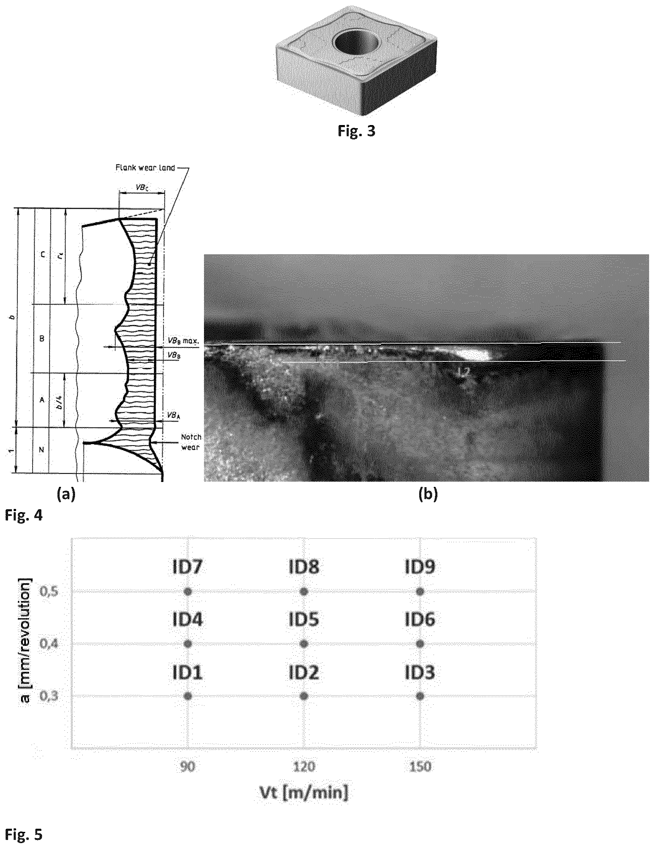

The most commonly used approach is the one relating to the **plan of factorial experiments,** which provides an appropriate distribution of experimental points according to the above cited principles. In a factorial plan all the levels of a given factor are combined with all the levels of any other factor. By way of example, in Figure 5 it is shown a matrix of experiments in case of cutting a duplex F51 steel , with insert CNMG 160612 MM 2025. For each point of the plan of experiments the tool wear analysis is carried out according to what established by the standard **ISO 3685: 1993 "Tool-life testing with single-point turning tools";** the norm also provides important indications about the morphology of the worn areas and the characteristic parameters.

In Figure 4 (a) it is reported the definition of the wear lip region, and so of the VB, according to what provided by the standard. In Figure 4 (b), it is shown an example of Vbmax measurement.

For each experimental point, the data relating to VB is collected at predefined time intervals. Therefore the so-called "wear curves" can be realized, which represent the progression of the wear lip with working time for each couple of process parameters assigned in terms of a and v.

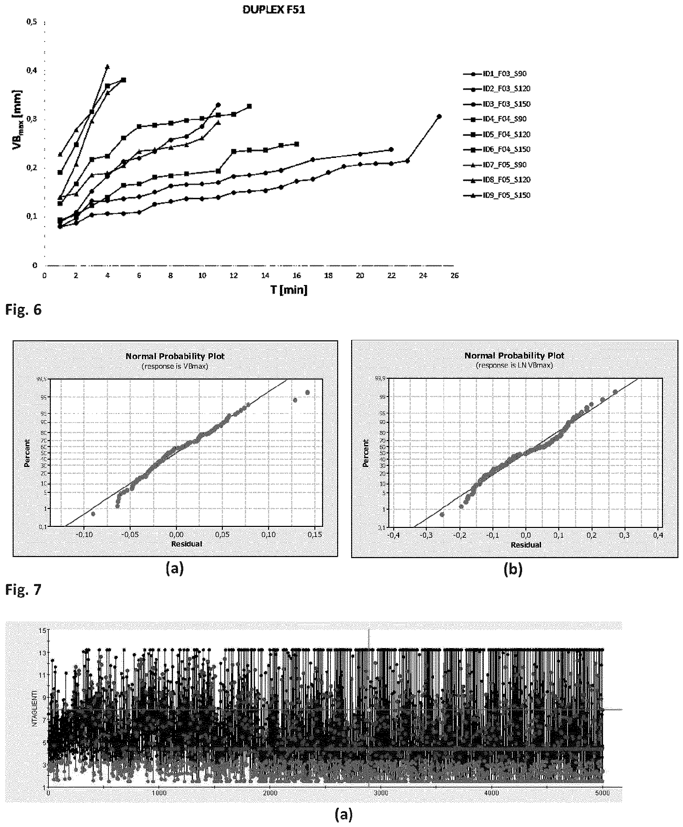

In Figure 6 there are shown the wear curves relating to working the duplex F51 steel with CNMG insert. By means of a regression analysis, the collected data are then used in step 2 for wear analytical modelling.

Step 2

This step is aimet at determining the relationship VB = *VB (t, a, v),* where *t,* a and *v* represent the model regressors (time, advancement, cutting speed).

Concerning the form of the regression equation, it is firstly assumed a simple model with regressors of the first order and their interaction, considering gradually higher orders.

The quality of models is evaluated by evaluating the following parameters:

- **Coefficient of determination R -Sq** - It is expressed in percentage and is interpreted as the proportion of variability of the observed response, which is explained by the linear regression model, so the more its value is high, the more the model can be considered reliable;
- **Coefficient of determination corrected R -Sq (adj)** - It is used to evaluate the addition of a regressive variable to the model;
- **p-Value P** - it allows to check, for each term of the regression, the null hypothesis, i.e. the hypothesis that a term does not have effects on the model. A low p-value ($<0.05$) indicates that it is possible to reject the null hypothesis;
- **Coefficient R-Sq (pred)** - it indicates the ability of a model to make predictions. By way of example, the following table shows the output on the analysis of regression data relating to the example of the duplex F51 steel.

## Regression Equation

$$LN\ VB = 17.9933 + 0.283505\ LN\ t - 9.33379\ LN\ v + 1.66826\ LN\ a + 0.0320733\ LN\ t^2 + 1.14453\ LN\ v^2$$

Summary of Model

S = 0.109688 R-Sq = 91.67% R-Sq (adj) = 91.32%
PRESS = 1.57433 R-Sq (pred) = 90.76%

Analysis of Variance

| Source | DF | Seq SS | Give SS | Give MS | F | P |
|---|---|---|---|---|---|---|
| Regression | 5 | 15.6204 | 15.6204 | 3.12407 | 259.659 | 0 |
| LN t | 1 | 1.5949 | 0.4201 | 0.42007 | 34.914 | 0 |
| LN v | 1 | 5.3107 | 0,095 | 0.09499 | 7,895 | 0.005804 |
| LN a | 1 | 8.5382 | 8.5398 | 8.53983 | 709.791 | 0 |
| LN t ^ 2 | 1 | 0.0498 | 0.0582 | 0.0582 | 4,837 | 0.029801 |
| LN v ^ 2 | 1 | 0.1268 | 0.1268 | 0.12683 | 10.541 | 0.00152 |
| error | 118 | 1.4197 | 1.4197 | 0.01203 | | |
| Total | 123 | 17.0401 | | | | |

It is clear, in this case, the goodness of the regression model (R-Sq, R-Sq (adj) and R-Sq (pred) are all higher than 90%), moreover, from the analysis of the P value, it can be seen that all the terms of the regression are significant.

The study is also accompanied by the both graphical and quantitative analysis of residues. The objective of this step is to check whether the residues comply with the following fundamental hypothesis of normality and homoscedasticity.

If one of the "main" aforementioned hypotheses is not met, suitable transformation of data will be used, that allow the statistical requirements to be observed. Among the usable transformations, the following ones are reported :

- logarithmic;
- reverse;
- quadratic;
- Box-Cox transformations.

As it can be seen from the analysis of Normal Probability Plot reported in the images of Figure 7, for the regression model relative to the case of duplex F51 steel, it was needed to make use of the logarithmic transformation (Figure 7b) since the residuals of the initial model (Figure 7) were not distributed normally .

Another advantage of the graph of normal probability is to allow a first identification of potential outliers, represented by points sufficiently distant from the reference straight line. Outliers are abnormal observations with respect to the data group; the presence of one or more outliers can lead to distortions in the results and therefore have to be removed.

After defining the regression equation it is carried out the analysis of outliers, lever points and influence points. Concerning the latter, it is worth remembering what follows:

- Lever points are those experimental points not aligned with the fitting pattern;
- An influential point is a point that, if removed, causes a remarkable change in the model's estimation ability.

For the regression model of the duplex F51 steel case, the following table shows the output relating to the diagnosis of abnormal observations:
Fits and Diagnostics for Unusual Observations

| Obs | LN VBmax | Fit | SE Fit | residual | St Resid | | |
|---|---|---|---|---|---|---|---|
| 2 | -2.26277 | 2.49056 | 0.029778 | 0.227795 | 2.15779 | R | |
| 75 | -1.65474 | 1.56841 | 0.047061 | -0.08634 | -0.8714 | | X |
| 100 | -0.89404 | -1.1611 | 0.021155 | 0.267061 | 2.48132 | R | |

R denotes an observation with a large standardized residual.

X denotes an observation whose X value gives it great leverage.

The points denoted by R are possible outliers while those indicated with X are points having a great influence on the model and therefore cannot be removed.

Step 3

In this step, the methodo developed provides the formalization and solution of the optimization problem. The optimization problem relates to the maximization of productivity, while observing the predetermined wear limit *(VBlim)*.
The objective function of the problem may be the Material Removal Rate (MRR) parameter maximization or the production time *tp* reduction at minimum.
MRR can be expressed as the product of cutting speed *v* by the advancement f and the depth of cut *p:*

$$MRR = v * f * p$$

and it represents the amount of material removed per unit of time (expressed in $mm^3/min$).
The production time is instead the sum of more terms and is expressed by the following relation:

$$t_p = t_0 + \frac{V}{MRR}\left(1 + \frac{t_{cu}}{T_L}\right)$$

where $t_0$ are the fixed times (machine preparation, controls, etc.), $T_L$ is the useful life of the tool, $T_{cu}$ is the tool replacing time, $V$ is the volume of material to be removed, $V/MRR$ is the contact time needed for the production of the piece and $V/(MRR\ T_L)$ is the quantity of replacements of the cutting edges.
The strict condition of the problem is therefore represented by the relationship

$$VB\ (v,\ a,\ t) = VBlim$$

wherein the first equation was estimated in step 2, and can also be expressed as a function of the useful life of the tool

$$T_L = T_L\ (f,\ v,\ VBlim).$$

It is worth mentioning that VB and $T_L$ are in fact directly connected since the useful life of a tool, for certain values of *f* and *v,* is uniquely determined if a value *VBlim* is fixed.
To solve the optimization problem, it is possible to use the method of the Response Surfaces (RSM, Response Surface Method), or suitable meta-heuristic techniques (Genetic Algorithm, Simulated Annealing, Particle Swarm Optimization, etc.).
The formalization of the problem is described below, with two objective functions and the observation of a strict condition.

**Objective functions:**

Minimization of production time $t_p$ and quantity of cutting edge replacements $N_t$

$$t_p = t_0 + \frac{V}{MRR}\left(1 + \frac{t_{cu}}{T_L}\right)$$

$$Nt = \frac{V}{MRR * T_L}$$

**Strict condition:**

Width of wear lip *VB lower than a set value VBlim*

$$VB = VB\ (t,\ f,\ v) < VBlim$$

With reference to the example of the duplex F51 steel, the solution technique used is the Multi-Objective Particle Swarm Optimization (PSO-MO), a meta-heuristics that mimics the behaviour of groups of animals while looking for food.

The volume of material to be removed for the piece used for the example is $V = 5*10^6$ mm$^3$

The research of the minimum of said functions was performed within the following variability range for the parameters:

0.3 mm/rev $<f$ <0.5 mm/rev
90 m/min $<v$ <150 m/min

The solution found by the algorithm MO-PSO is shown in the following table:

| F [mm / rev] | V [m / min] | Nt | $_L$T [min] | T$_P$ [min] |
|---|---|---|---|---|
| 0.5 | 118 | 7.86 | 4.3 | 43.8 |

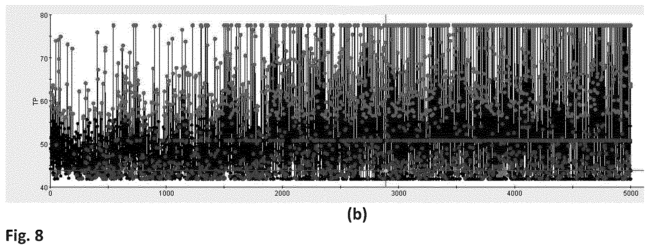

The images in Figure 8 report historical data relating to the search for solution of the algorithm MO-PSO of the objective functions: Nt (a) and tp (b), respectively.

**Claims**

1. Method for process parameters optimization in a chip removal machining, which allows to maximize productivity while observing the maximum allowable wear limit for the tool, comprising the steps of:

    a. defining the boundary conditions of the process, said conditions comprising at least the material to be worked and the type of tool used;
    b. defining the process parameters to be used for the tool wear estimation, said parameters comprising at least: tool-material contact time (t), cutting speed (v) and advancement (a), and defining for each one of said parameters a variability range within which the research for optimal values is to be carried out;
    c. defining an experiments plan in which, for determined values of said parameters, the tool wear is analysed at distinct time intervals and carrying out said experiments plan;
    d. on the basis of the data collected at point c. estimating a regression equation that estimates the dependence of the tool wear lip (VB) on said process parameters;
    e. solving an optimization problem in which the values of said process parameters are determined, which allow the production time to be reduced at minimum and the quantity of tools used to be reduced at minimum:
    **characterized in that**:

        in solving this optimization problem in point e. the observation of a maximum wear value (VBLim) of the wear lip (VB) is imposed as strict condition
        and **in that**
        for the estimation of the dependence of wear lip on process parameters, the relationship estimated in point d is used.

2. Method for process parameters optimization in a chip removal machining according to claim 1, **characterized in that** said process parameters to be used for the estimation of the tool wear comprise the depth of cut (p).

3. Method for process parameters optimization in a chip removal machining according to claim 1 or 2, **characterized in that** said experimental plan is an experimental plan of factorial type.

4. Method for process parameters optimization in a chip removal machining according to any one of the preceding claims, **characterized in that** the regression equation is an equation with regressors of the first order and their interactions.

5. Method for process parameters optimization in a chip removal machining according to any one of the preceding claims, **characterized in that** the objective function of said optimization problem as in point e. is the production time tp.

6. Method for process parameters optimization in a chip removal machining according to any one of the preceding claims, **characterized in that** said optimization problem as in point e. comprises also the Material Removal Rate maximization.


**Patentansprüche**

1. Verfahren für Prozessparameter zur Optimierung in einer Spanbearbeitung, zur Maximierung der Produktivität, unter gleichzeitigen Einhaltung der maximal zulässigen Verschleißgrenze für das Werkzeug, folgende Schritte aufweisend:

   a. Bestimmung der Randbedingungen des Verfahrens, wobei die Bedingungen umfassen zumindest das bearbeitendes Material und die Art des verwendeten Werkzeugs;
   b. Bestimmung der Prozessparameter, die für die Werkzeugverschleißschätzung verwendet werden, wobei die Parameter zumindest folgendes umfassen: Kontaktzeit des Werkzeugmaterials (t), Schnittgeschwindigkeit (v) und Vorwärtsgeschwindigkeit (a) und Bestimmung für jeden der genannten Parameter eines Variabilitätsbereichs, innerhalb dessen die Suche nach optimalen Werten durchgeführt werden soll;
   c. Bestimmung eines Versuchsplans, wobei für bestimmte Werte der genannten Parameter der Werkzeugverschleiß bei unterschiedlichen Zeitintervallen analysiert wird wobei das genannte Versuchsplan ausgeführt wird;
   d. auf der Grundlage der unter Punkt c angegebenen Daten, Bestimmung einer Regressionsgleichung, die die Abhängigkeit des Verschleißlippe des Werkzeugs (VB) an den genannten Prozessparametern schätzt;
   e. Lösung eines Optimierungsproblems in dem die Werte der genannten Prozessparameter ermittelt werden, die gestatten, die Produktionszeit und die Menge der verwendeten Werkzeuge auf ein Minimum zu reduzieren:
   **dadurch gekennzeichnet, dass**:

   bei der Lösung dieses Optimierungsproblems bei Punkt e., die Einhaltung eines maximalen Verschleißwertes (VBLim) der Verschleißlippe (VB) strengen Bedingungen unterliegt
   und dass
   für die Schätzung der Abhängigkeit der Verschleißlippe von Prozessparametern wird die in Punkt d geschätzte Beziehung verwendet.

2. Verfahren für Prozessparameter zur Optimierung in einer Spanbearbeitung nach Anspruch 1, **dadurch gekennzeichnet, dass** die genannten zu verwendenden Prozessparameter für die Abschätzung des Werkzeugverschleißes die Tiefe des Schnittes (p) umfassen.

3. Verfahren für Prozessparameter zur Optimierung in einer Spanbearbeitung nach Anspruch 1 oder 2, **dadurch gekennzeichnet, dass** der genannte Versuchsplan ein faktorieller Versuchsplan ist.

4. Verfahren für Prozessparameter zur Optimierung in einer Spanbearbeitung nach einem der vorhergehenden Ansprüche, **dadurch gekennzeichnet, dass** die Regressionsgleichung eine Gleichung mit Regressoren der ersten Ordnung und ihren Wechselwirkungen aufweist.

5. Verfahren für Prozessparameter zur Optimierung in einer Spanbearbeitung nach der vorhergehenden Ansprüche, **dadurch gekennzeichnet, dass** die objektive Funktion des genannten Optimierungsproblems wie in Punkt e. die Produktionszeit tp ist.

**6.** Verfahren für Prozessparameter zur Optimierung in einer Spanbearbeitung nach der vorhergehenden Ansprüche, **dadurch gekennzeichnet, dass** das genannte Optimierungsproblem wie in Punkt e. auch die Maximierung der Materialabtragleistung.

**Revendications**

**1.** Procédé pour une optimisation des paramètres de processus dans un usinage pour l'enlèvement de copeaux, qui permet de maximiser la productivité tout en observant la limite d'usure maximale admissible pour l'outil, comprenant les étapes consistant à:

  a. définir les limites des conditions du procédé, lesdites conditions comprenant au moins le matériau à être usiné et le type d'outil utilisé;
  b. définir les paramètres de processus à utiliser pour estimer l'usure de l'outil, lesdits paramètres comprenant au moins: temps de contact matière-outil (t), vitesse de coupe (v) et avancement (a), et définir pour chacun desdits paramètres un intervalle de variabilité dans laquelle la recherche de valeurs optimales doit être effectuée;
  c. définir un plan d'essai dans lequel, pour des valeurs déterminées desdits paramètres, l'usure de l'outil étant analysée à différents intervalles de temps et de mise en œuvre desdits plans d'essai; d. sur la base des données collectées au point c, estimer une équation de régression qui estime la dépendance de la lèvre d'usure de l'outil (VB) sur lesdits paramètres de processus;
  e. résoudre un problème d'optimisation dans lequel les valeurs desdits paramètres de processus sont déterminées, ce qui permet de réduire au minimum le temps de production et la quantité des outils utilisés:
  **caractérisé en ce que**:

    en résolvant ce problème d'optimisation au point e, l'observation d'une valeur d'usure maximale (VBLim) de la lèvre d'usure (VB) est imposée comme condition stricte et que
    pour l'estimation de la dépendance de la lèvre d'usure aux paramètres du procédé, la relation estimée au point d est utilisée.

**2.** Procédé pour une optimisation de paramètres de processus dans un usinage avec enlèvement de copeaux selon la revendication 1, **caractérisé en ce que** lesdits paramètres de processus à utiliser pour l'estimation de l'usure de l'outil comprennent la profondeur de coupe (p).

**3.** Procédé pour une optimisation de paramètres de processus dans un usinage avec enlèvement de copeaux selon la revendication 1 ou 2, **caractérisé en ce que** ledit plan d'essai est un plan expérimental de type factoriel.

**4.** Procédé pour une optimisation de paramètres de processus dans un usinage avec enlèvement de copeaux selon une des revendications précédentes, **caractérisé en ce que** l'équation de régression est une équation avec des régresseurs du premier ordre et de leurs interactions.

**5.** Procédé pour une optimisation de paramètres de processus dans un usinage avec enlèvement de copeaux selon une des revendications précédentes, **caractérisé en ce que** l'objectif en fonction dudit problème d'optimisation comme indiqué au point e. est le temps de production tp.

**6.** Procédé pour une optimisation de paramètres de processus dans un usinage avec enlèvement de copeaux selon une des revendications précédentes, **caractérisé en ce que** ledit problème d'optimisation comme indiqué au point e. comprend également la maximisation du taux d'enlèvement de matière.

Fig. 1

Objective function

$$Nt = V/(MRR*TL)$$

$$tp = t0 + V/MRR*(1+t\_cu/TL)$$

EP 3 406 376 B1

Design of Experiments

Tool wear data collection

STEP 1

Data regression analysis

Regression Equation
VB = f(a,v,p)

STEP 2

PROBLEM FORMALIZATION

min(

Nt = V/(MRR*TL)

tp = t0 + V/MRR*(1+t_cu/TL)

)

con vincolo:

VB < VBlim

STEP 3

PROBLEM SOLUTION
ottimo (a,v,p)

**Fig. 2**

Fig. 3

(a)                                                    (b)

Fig. 4

Fig. 5

Fig. 6

(a)

(b)

Fig. 7

(a)

(b)

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5801963 A